(19) Europäisches Patentamt
European Patent Office
Office européen des brevets

(11) **EP 2 666 361 A2**

(12) **EUROPÄISCHE PATENTANMELDUNG**

(43) Veröffentlichungstag:
**27.11.2013 Patentblatt 2013/48**

(51) Int Cl.:
***A21C 3/08*** *(2006.01)*

(21) Anmeldenummer: **13159890.6**

(22) Anmeldetag: **19.03.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **24.05.2012 DE 102012208754**

(71) Anmelder: **Fritsch GmbH**
**97348 Markt Einersheim (DE)**

(72) Erfinder:
• **Hoos, Josef**
**97348 Markt Einersheim (DE)**
• **Bernhardt, Udo**
**97346 Iphofen (DE)**

(74) Vertreter: **advotec.**
**Patent- und Rechtsanwälte**
**Beethovenstrasse 5**
**97080 Würzburg (DE)**

(54) **Verfahren und Vorrichtung zum Twisten von Teigstreifen**

(57)   Die Erfindung betrifft ein Verfahren zum Twisten von Teigstreifen (08, 28) mit zumindest zwei unteren Basisbändern (05, 06, 23, 24, 25, 26, 27), die die Teigstreifen (08, 28) entlang einer vorgegebenen Twiststrecke mit einer Fördergeschwindigkeit $V_0$ fördern, und mit zumindest zwei den Basisbändern (05, 06, 23, 24, 25, 26, 27) zugeordneten von oben angreifenden Twistbändern (03, 04, 18, 19, 20, 21, 22), wobei die Teigstreifen (08, 28) am Beginn der Twiststrecke im Wesentlichen gleichzeitig mit den Basisbändern (05, 06, 23, 24, 25, 26, 27) und den jeweils zugeordneten Twistbändern (03, 04, 18, 19, 20, 21, 22) in Eingriff kommen, und wobei zumindest eines der Twistbänder (03, 19, 21) mit einer von der Fördergeschwindigkeit $V_0$ um den Differenzbetrag abweichenden Umlaufgeschwindigkeit $U_1$ angetrieben wird, um die Teigstreifen (08, 28) entlang der Twiststrecke zu twisten, und wobei das diesem Twistband (03, 19, 21) zugeordnete Basisband (05, 24, 26) mit einer von der Fördergeschwindigkeit $V_0$ um einen Differenzbetrag abweichenden Umlaufgeschwindigkeit $U_2$ angetrieben wird, um die Fördergeschwindigkeit der Teigstreifen (08, 28) entlang der Twiststrecke unter Ausgleich des vom Basisband aufgebrachten Differenzbetrags konstant bei $V_0$ zu halten, und wobei die Teigstreifen (08, 28) am Ende der Twiststrecke im Wesentlichen gleichzeitig mit den Basisbändern (05, 06, 23, 24, 25, 26, 27) und den Twistbändern (03, 04, 18, 19, 20, 21, 22) außer Eingriff kommen.

Fig. 2

**EP 2 666 361 A2**

**Beschreibung**

Die Erfindung betrifft ein Verfahren zum Twisten von beispielsweise aus einem Teigband geschnittenen langen, schmalen Teigstreifen. Weiter betrifft die Erfindung eine Vorrichtung zur Durchführung des erfindungsgemäßen Verfahrens.

Zur Herstellung verschiedener Backprodukte werden um ihre Längsachse verdrehte bzw. getwistete Teigstränge benötigt, die in vergleichsweise großer Länge hergestellt und dann gegebenenfalls auf einzelne Längenabschnitte unterteilt werden. Für das Twisten der Teigstränge sind aus dem Stand der Technik verschiedene Verfahren und Vorrichtungen bekannt.

Zum Twisten insbesondere von Teigsorten höherer bis höchster Qualität, beispielsweise zum Twisten von Blätterteigen, werden bisher Verfahrensweisen eingesetzt, bei denen von einem kontinuierlich zugeführten Teigband abgeschnittene schmale Teigstreifen größerer Länge einzeln getwistet werden. Dazu werden die Teigstreifen an beiden Enden von gegenüber von einem Basisband arbeitenden Twistbändern erfasst. Eines der beiden Twistbänder hat dabei exakt die gleiche Geschwindigkeit wie das Basisband, auf dem der Teigstrang herangeführt wird. Auf diese Weise wird das entsprechende Ende des Teigstrangs festgehalten ohne verdrillt oder vertwistet zu werden. Das andere am gegenüberliegenden Ende des Teigstreifens angreifende Twistband hingegen arbeitet mit einer beachtlichen Differenzgeschwindigkeit, durch die der Teigstreifen von diesem einen Ende her über seine ganze Länge in dem gewünschten Maß getwistet wird. Die Drillwinkel liegen dabei zwischen 360° und etwa 1.440°, was einer Umdrehung bis zu vier Umdrehungen über die gesamte Länge des Teigstreifens von circa 500 bis 800 mm Länge entspricht. Durch das einseitige Twisten des Teigstreifens erhält dieser mit der zunehmenden Verdrillung eine Schräglage von circa 15 bis 45° gegenüber der Transportrichtung des Basisbandes. Diese Schräglage beruht auf dem Umstand, dass das eine Ende des Teigstreifens beim Twisten über das Basisband abrollt und aufgrund dieser Abrollbewegung gegenüber dem zweiten Ende des Teigstreifens voreilt. Die dadurch verursachte Schräglage hat der getwistete Teigstreifen auch bei der Übergabe auf die nachfolgenden Bearbeitungsstationen, beispielsweise ein Gärband oder dergleichen, so dass der Teigstreifen stets mit einem Ende voran in nachfolgende Bearbeitungsstufen übergeben wird. Diese Schräglage ist außerordentlich unerwünscht, da sie einen sicheren Bearbeitungsprozess verhindert und häufig zu Störungen in nachfolgenden Bearbeitungsstufen führt.

Zur Vermeidung der Schräglage am Ende des Twistens schlägt die DE 39 03 122 C1 eine Vorrichtung vor, bei der die ungetwisteten Teigstreifen bereits mit einer definierten Schräglage an die Twistvorrichtung übergeben werden. Die Schräglage bei der Übergabe an die Twistvorrichtung ist dabei gerade so gewählt, dass durch die Anfangsschräglage die durch das Twisten erzeugte Schräglage ausgeglichen wird. Im Ergebnis wird dadurch erreicht, dass die Teigstreifen beim Verlassen der Twistbänder wieder ihre rechtwinklig zur Transportrichtung verlaufende Soll-Lage einnehmen.

Nachteilig an dieser Verfahrensweise ist es, dass die Aufstellung der vorgelagerten Bearbeitungsstufe in einem exakten Schrägwinkel relativ zur Twistvorrichtung erfolgen muss. Sobald Abweichungen der gewünschten Soll-Lage rechtwinklig zur Transportrichtung beim Verlassen der Twistbänder auftreten, muss die gesamte vorgelagerte Bearbeitungsstufe neu ausgerichtet werden, was einen hohen Justier- und Zeitaufwand darstellt. Außerdem wird eine lineare Aufstellung der Gesamtanlage durch den Winkelversatz zwischen der Twistvorrichtung und der vorgelagerten Bearbeitungsstufe ausgeschlossen.

Aufgabe der vorliegenden Erfindung ist es deshalb, ein Verfahren und eine Vorrichtung zum Twisten von Teigstreifen vorzuschlagen, mit denen die Nachteile des vorbekannten Stands der Technik vermieden werden können.

Bei den bekannten Twistvorrichtungen wurden die vorhandenen Basisbänder, auf denen die Teigstreifen während des Transports durch die Twistvorrichtung aufliegen, alle mit der gleichen Fördergeschwindigkeit angetrieben. Durch diese gleiche Fördergeschwindigkeit aller Basisbänder wurde gewährleistet, dass die Teigstreifen in den Bereichen der Twistvorrichtung, in denen die Twistbänder nicht an den Teigstreifen zum Eingriff kommen, über die gesamte Länge des Teigstreifens mit einer gleichförmigen Fördergeschwindigkeit gefördert wurden. Diese gleichförmige Umlaufgeschwindigkeit aller Basisbänder führte jedoch zu dem Nachteil, dass in den Bereichen, in denen die Twistbänder mit einer von der Fördergeschwindigkeit abweichenden Umlaufgeschwindigkeit angetrieben wurden, um eine Vertwistung des Teigstreifens zu bewirken, ein translatorisches Voreilen des Teigstreifens durch die zusätzliche Abwärtsbewegung des Teigstreifens auf dem Basisband verursacht wurde.

Das erfindungsgemäße Verfahren geht nun von der bisher aus dem Stand der Technik bekannten Strategie der gleichförmigen Umlaufgeschwindigkeit aller Basisbänder ab. Gemäß dem erfindungsgemäßen Verfahren ist, wie bei den bekannten Twistverfahren, zumindest ein Twistband vorgesehen, dessen Umlaufgeschwindigkeit von der für die Beförderung der Teigstreifen vorgesehenen Fördergeschwindigkeit abweicht, um dadurch die gewünschte Verdrillung bzw. die Vertwistung des Teigstreifens zu bewirken. Der Grundgedanke des erfindungsgemäßen Verfahrens beruht nun darauf, dass das Basisband, das diesem Twistband mit der abweichenden Differenzgeschwindigkeit gegenüberliegt, ebenfalls mit einer von der Fördergeschwindigkeit abweichenden Umlaufgeschwindigkeit angetrieben wird. Diese abweichende Umlaufgeschwindigkeit des Basisbandes wird dabei so gewählt, dass das beim Twisten verursachte Voreilen des Teigstreifens, das auf der Abwärtsbewegung des Teigstreifens beruht, durch den Differenzbetrag der Umlaufgeschwindigkeit des Basisbandes ausgeglichen wird. Dies bedeutet mit anderen Worten, dass die verschiedenen Basisbänder jeweils unterschiedliche Umlaufgeschwindigkeiten aufweisen, wobei die Umlaufgeschwindigkeit der verschiedenen Basisbänder gerade so gewählt wird, dass der Teigstreifen im Ergebnis über die gesamte Länge mit einer konstanten Fördergeschwindigkeit $V_0$ gefördert wird. Eine schräge Übergabe der Teigstreifen und auch eine Lagekorrektur der Teigstreifen beim Verlassen der Twistvorrichtung kann auf diese Weise entfallen, da die rechtwinklig auf die Twistvorrichtung übergebenen Teigstreifen während des Twistens nicht um ihre Hochachse verdreht werden sondern jeweils ihre rechtwinklige Sollausrichtung beibehalten.

Da die Beibehaltung der Sollausrichtung der Teigstreifen relativ zur Förderrichtung auf der Abstimmung der Umlaufgeschwindigkeiten der Twistbänder zu den jeweils gegenüber liegenden Basisbändern beruht, ist es erfindungsgemäß weiterhin erforderlich, dass die Twistbänder und Basisbänder im Wesentlichen gleichzeitig mit den Teigstreifen in Eingriff und auch außer Eingriff kommen. Würden die Teigstreifen nämlich auf den Basisbändern gefördert, ohne dass zugleich die Twistbänder in Eingriff sind, so würden die Teigstreifen aufgrund der unterschiedlichen Umlaufgeschwindigkeiten der verschiedenen Basisbänder um ihre Hochachse verdreht, was unerwünscht ist.

Bei Einsatz des erfindungsgemäßen Verfahrens ist es ohne Weiteres möglich, dass die jeweils notwendigen Geschwindigkeitsdifferenzen der Umlaufgeschwindigkeiten an den verschiedenen Basisbändern während des Einrichtens der Twistvorrichtung durch einfache Anfahrversuche gefunden werden. Geht man aber von einem zylindrischen Querschnitt des Teigstücks aus bzw. nimmt man einen nahezu zylindrischen Abrollumfang des Teigstücks an, wie er auch bei rechteckigen Teigstücken beim Twisten auftritt, so kann die Umlaufgeschwindigkeit des Basisbandes zum Ausgleich des Voreilens der getwisteten Teigstücke nach folgender Formel gefunden werden: Umlaufgeschwindigkeit des Basisbandes = Umlaufgeschwindigkeit des zugeordneten Twistbandes minus das Doppelte der vorgegebenen Fördergeschwindigkeit ($U_2=U_1-2V_0$). Die Herleitung dieser Formel wird nachfolgend im Rahmen der Figurenbeschreibung erläutert.

Für die meisten Bearbeitungsvorgänge zur Verarbeitung der Teigstreifen ist es vorteilhaft, wenn die Teigstreifen während des gesamten Produktionsprozesses eine rechtwinklige Ausrichtung zur Transportrichtung einnehmen. Somit ist es gemäß einer bevorzugten Verfahrensvariante vorgesehen, dass die Teigstreifen im rechten Winkel zur Transportrichtung der Basisbänder auf diese aufgegeben werden.

Um eine zuverlässige rechtwinklige Übergabe der Teigstreifen an die Twistvorrichtung zu gewährleisten, kann vor der Twistvorrichtung eine Ausrichteinrichtung vorgesehen werden, mit der die Teigstreifen vor der Übergabe an die Basisbänder im rechten Winkel zur Transportrichtung ausgerichtet werden. Durch diese zusätzliche Einrichtung vor der Übergabe an die Twistvorrichtung sind Lagefehler der Teigstreifen, die durch das erfindungsgemäße Verfahren möglicherweise sogar weiter verstärkt werden würden, weitgehend ausgeschlossen.

Auch zur Weiterverarbeitung der getwisteten Teigstreifen ist es vielfach vorteilhaft, wenn diese wiederum im rechten Winkel zur Transportrichtung liegen. Somit ist es gemäß einer weiteren Verfahrensvariante vorgesehen, die Teigstreifen im rechten Winkel zur Transportrichtung von den Basisbändern abzugeben.

In der Grundform des erfindungsgemäßen Verfahrens sind nur zwei Bandpaare aus jeweils einem Basisband und einem diesem Basisband zugeordneten Twistband vorhanden. Zumindest eines dieser Twistbänder weist dabei eine Differenzgeschwindigkeit zur Fördergeschwindigkeit auf, um das Twisten der Teigstreifen zu realisieren. Das diesem Twistband zugeordnete Basisband weist eine Umlaufgeschwindigkeit auf, um die effektive Fördergeschwindigkeit des Teigstreifens wiederum auf das gewünschte Maß zu justieren, so dass eine Verdrehung des Teigstreifens um seine Hochachse während des Twistens verhindert wird. Gemäß einer vorteilhaften Verfahrensvariante ist es jedoch möglich, dass mehr als zwei Bandpaare aus jeweils einem Basisband und einem dem Basisband zugeordneten Twistband gleichzeitig während des Twistens an dem Teigstreifen zum Eingriff kommen. Durch diese Mehrzahl an Bandpaaren ist es möglich, den Teigstreifen in nebeneinander liegenden Abschnitten zu twisten, wobei jedoch aufgrund der erfindungsgemäßen Justierung der Umlaufgeschwindigkeiten der Basisbänder in Korrelation zur Umlaufgeschwindigkeit der Twistbänder und in Korrelation zur gewünschten Fördergeschwindigkeit gewährleistet wird, dass der Teigstreifen über seine gesamte Länge gleichförmig mit der gewünschten Fördergeschwindigkeit in Förderrichtung gefördert wird.

Beim erfindungsgemäßen Twisten der Teigstreifen ist es in den meisten Fällen wünschenswert, dass der Teigstreifen zumindest an einem Ende nicht rotiert, so dass durch eine davon abweichende Rotationsbewegung des Teigstreifens an dem gegenüber liegendem Ende eine Torsion des Teigstreifens und die dadurch verursachte Twistung des Teigstreifens realisiert wird. Um das Abrollen des Teigstreifens an einem Ende zu verhindern, werden die entsprechenden Twistbänder und Basisbänder an diesem Ende jeweils mit einer der Fördergeschwindigkeit entsprechenden Umlaufgeschwindigkeit angetrieben. Entsprechen nämlich die Umlaufgeschwindigkeiten der Twistbänder und der gegenüberliegenden Basisbänder einander, so ist eine Rotation des Teigstreifens in diesem Bereich ausgeschlossen. Kommen während des Twistens der Teigstreifen mehrere nebeneinander angeordnete Bandpaare mit jeweils einem Twistband und einem Basisband an dem Teigstreifen zum Eingriff, so gibt es unterschiedliche Varianten des Twistens. Gemäß einer ersten Verfahrensvariante ist es vorgesehen, dass die Umlaufgeschwindigkeit von jeweils benachbarten Twistbändern über die Länge des Teigstreifens stufenweise höher wird. Durch diese stufenweise Erhöhung der Umlaufgeschwindigkeit der jeweils benachbarten Twistbänder wird erreicht, dass die Teigstreifen über ihre Länge mit im Wesentlichen konstanter Steigung getwistet werden, wobei die dazu erforderliche Torsionsbewegung von den jeweils benachbarten Twistbändern gestuft auf die Teigstreifen übertragen wird. Diese gestufte Übertragung der Torsionsbewegung auf die Teigstreifen ist insbesondere dann von Interesse, wenn der Teigstreifen relativ lang ist und die notwendige Torsionsbewegung deshalb nicht in einer Stufe aufgebracht werden kann.

Alternativ zur gestuften Erhöhung der Umlaufgeschwindigkeit von jeweils benachbarten Twistbändern ist nach einer alternativen zweiten Verfahrensvariante vorgesehen, dass die Umlaufgeschwindigkeit jeweils benachbarter Twistbänder über die Länge des Teigstreifens alternierend erhöht und abgesenkt wird. Durch diese sich alternierend ändernde Umlaufgeschwindigkeit der jeweils benachbarten Twistbänder wird bewirkt, dass die jeweils sich daraus ergebenden Teigstreifenabschnitte mit alternierendem Drehsinn getwistet werden. Dies bedeutet mit anderen Worten, dass der Teigstreifen nach Verlassen der Twistvorrichtung mehrere Teigstreifenabschnitte aufweist, deren Drehsinn sich jeweils alternierend ändert.

Mit dem erfindungsgemäßen Verfahren können insbesondere auch sehr lange Teigstreifen getwistet werden, insbesondere wenn mehrere nebeneinander angeordnete Bandpaare gleichzeitig an dem Teigstreifen zum Eingriff kommen. Im Ergebnis ist es somit möglich, auch Teigstreifen zu twisten, deren Länge ein Vielfaches der Länge des fertigen Backproduktes entspricht. Gemäß einer bevorzugten Verfahrensvariante ist es deshalb vorgesehen, dass der getwistete Teigstreifen nach dem Twisten mit zumindest einer Trenneinrichtung in zumindest zwei getwistete Teigstreifenabschnitte aufgeteilt wird. Die Länge der Teigstreifenabschnitte kann dabei auf die gewünschte Länge des Backproduktes abgestimmt werden.

In welcher Weise die getwisteten Teigstreifen mit der Trenneinrichtung aufgeteilt werden, ist grundsätzlich beliebig. Wurde der Teigstreifen mit mehreren Teigstreifenabschnitten, die jeweils einen alternierenden Drehsinn aufweisen, getwistet, so ist es besonders vorteilhaft, wenn die Trenneinrichtung den getwisteten Teigstreifen in den Bereichen aufteilt, in denen der Drehsinn des Teigstreifens jeweils wechselt. Im Ergebnis wird dadurch erreicht, dass die nach dem Trennen erhaltenen Teigstreifenabschnitte jeweils nur noch einen Drehsinn aufweisen, so dass auch das fertige Backprodukt zum Ende hin nur einen Drehsinn, d.h. eine umlaufende Steigung, aufweist.

Der Teig wird durch das Verdrillen während des Twistens unter erhebliche Spannung gesetzt und neigt deshalb nach Verlassen der Twistbänder dazu, sich wieder durch Abbau der inneren Spannungen aufzutwisten. Um dieses unerwünschte Auftwisten der getwisteten Teigstreifen zu verhindern, ist es besonders vorteilhaft, wenn die getwisteten Teigstreifen unmittelbar nach Verlassen der Twistbänder von einer Andrückvorrichtung erfasst werden, um die Twistung der Teigstreifen möglichst vollständig zu fixieren.

Die erfindungsgemäße Vorrichtung zum Twisten von Teigstreifen, die insbesondere vorher aus einem Teigband geschnitten sind und bevorzugt eine lange schmale Gestalt aufweisen, umfasst gattungsgemäß zumindest zwei Basisbänder, auf denen die Teigstreifen aufliegen, und zwei den Basisbändern jeweils zugeordnete Twistbänder. Ein erstes Twistband und das zugeordnete Basisband können dabei beispielsweise synchron jeweils mit der vorgesehenen Fördergeschwindigkeit der Teigstreifen innerhalb der Twistvorrichtung angetrieben werden, so dass der Teigstreifen in der Wirkzone dieses Bandpaares keine Rotation erfährt, sondern gleichförmig mit der Fördergeschwindigkeit in Förderrichtung translatorisch weitergefördert wird. Das zweite Twistband wird dann mit einer davon um einen Differenzbetrag abweichenden Umlaufgeschwindigkeit angetrieben, um die zum Twisten erforderliche Torsion auf den Teigstreifen zu übertragen.

Um eine Schräglage der Teigstreifen durch das Voreilen des abrollenden Endes der Teigstreifen zu vermeiden, ist es erfindungsgemäß erforderlich, die Umlaufgeschwindigkeit des Basisbandes, das dem nicht mit der vorgegebenen Fördergeschwindigkeit umlaufenden Twistband gegenüber liegt, entsprechend zu justieren. Die erfindungsgemäße Vorrichtung ist deshalb zum einen dadurch charakterisiert, dass die Umlaufgeschwindigkeiten der beiden Basisbänder unabhängig voneinander jeweils in Abhängigkeit von der Fördergeschwindigkeit und in Abhängigkeit von der Umlaufgeschwindigkeit des jeweils zugeordneten Twistbandes einstellbar sind. Dadurch wird erreicht, dass durch entsprechende Variation der Umlaufgeschwindigkeiten der verschiedenen Basisbänder eine über die Länge des Teigstreifens gleichförmige translatorische Bewegung in Förderrichtung erreicht wird, und eine Schräglage des Teigstreifens relativ zur Förderrichtung ausgeschlossen ist.

Die erfindungsgemäße Vorrichtung ist außerdem dadurch gekennzeichnet, dass die Twistbänder und die Basisbänder derart angeordnet sind, dass die einander zugeordneten Bandpaare alle gleichzeitig am Teigstreifen in Eingriff und auch gleichzeitig außer Eingriff kommen. Denn die gleichförmige translatorische Bewegung der Teigstreifen in Förderrichtung bedingt es, dass die unterschiedlichen Geschwindigkeiten der Twistbänder durch jeweils darauf abgestimmten unterschiedlichen Geschwindigkeiten der Basisbänder ausgeglichen werden. Um eine Verdrehung der Teigstreifen um ihre Hochachse und eine damit verbundene Schräglage zu vermeiden ist es darum unbedingt erforderlich, dass die Bandpaare jeweils gleichzeitig an dem Teigstreifen zum Eingriff kommen, da ansonsten die unterschiedlichen Fördergeschwindigkeiten der Basisbänder vor bzw. nach der eigentlichen Twiststrecke ein Vor- bzw. Nacheilen der entsprechenden Teigstreifenabschnitte bewirken würden.

Um insbesondere auch längere Teigstreifen twisten zu können, ist es vorteilhaft, wenn die Vorrichtung mehr als zwei Bandpaare aus jeweils einem Basisband und einem dem Basisband zugeordneten Twistband aufweist.

Soll die Vertwistung des Teigstreifens gleichförmig aufgebracht werden, so ist es besonders vorteilhaft, wenn die mehreren Bandpaare in der Vorrichtung mit einem äquidistanten Abstand nebeneinander angeordnet sind.

Um Teigstreifen unterschiedlicher Breite verarbeiten zu können bzw. um Teigstreifenabschnitte unterschiedlicher Breite produzieren zu können, ist es besonders vorteilhaft wenn der Abstand zwischen den einzelnen Bandpaaren einstellbar ist.

Sind in der Vorrichtung mehrere nebeneinander angeordnete Bandpaare vorgesehen und sollen Teigstreifen mit über ihre Länge alternierendem Drehsinn getwistet werden, so muss die Fördergeschwindigkeit der Basisbänder alternierend erhöht bzw. abgesenkt werden. Um dies in einfacher Weise maschinentechnisch zu realisieren, ist es besonders vorteilhaft, wenn eine erste Gruppe von jeweils nicht unmittelbar benachbarten Basisbändern mittels einer ersten Antriebseinrichtung antreibbar ist, und eine zweite Gruppe von jeweils nicht unmittelbar benachbarten Basisbändern mittels einer zweiten Antriebseinrichtung antreibbar ist. Die Antriebsgeschwindigkeiten der ersten Antriebseinrichtung ist dabei unabhängig von der Antriebsgeschwindigkeit der zweiten Antriebseinrichtung wählbar. Sind beispielsweise fünf Bandpaare in der Vorrichtung vorhanden, so kann das erste, das dritte und das fünfte Bandpaar beispielsweise jeweils synchron zu den zugeordneten Twistbändern mit der vorgegebenen Fördergeschwindigkeit angetrieben werden, um den Teigstreifen in den zugeordneten Bereichen ohne Rotation weiterzufördern. Die dazwischen liegenden zweiten und vierten Bandpaare werden dagegen mit einer davon abweichenden Umlaufgeschwindigkeit angetrieben, um die gewünschte Vertwistung des Teigstreifens in vier aufeinanderfolgenden Abschnitten mit jeweils wechselndem Drehsinn zu realisieren.

Um die notwendige Rotationsbewegung beim Twisten effektiv auf die Teigstreifen übertragen zu können, ist es besonders vorteilhaft, wenn die Twistbänder in der Art von Keilriemen ausgebildet sind.

Die zum Teigstück weisende Seite des Keilriemens kann dabei bevorzugt eine Profilierung aufweisen, um die Reibung zwischen Keilriemen und Teig zu erhöhen.

Die die Teigstücke tragenden Basisbänder sollten dagegen bevorzugt in der Art von Gliederbändern ausgebildet sein.

Im Hinblick auf die Hygiene ist es dabei besonders vorteilhaft, wenn die Gliederbänder aus Kunststoff hergestellt sind.

Die erfindungsgemäße Vorrichtung kann in größere Anlagen zur Verarbeitung von Teig eingebunden werden. Eine solche Teigverarbeitungsanlage zum Twisten von Teigstreifen umfasst bevorzugt eine Schneidvorrichtung zur Herstellung und Vereinzelung von Teigstreifen aus einem Teigband. Diese Schneidvorrichtung wird der Twistvorrichtung vorgeordnet, um die zum Twisten erforderlichen Teigstreifen aus dem Teigband herzustellen.

Die Schneidvorrichtung und die Twistvorrichtung können dabei bevorzugt kolinear hintereinander angeordnet werden, wobei ein Winkelversatz zwischen der Schneidvorrichtung und der Twistvorrichtung entfallen kann, da durch die erfindungsgemäße Vorrichtung bzw. das erfindungsgemäße Verfahren eine Schräglage der Teigstreifen ausgeschlossen ist.

Um die Twistung möglichst exakt durchführen zu können, kann zwischen der Schneidvorrichtung und der Twistvorrichtung eine Ausrichteinrichtung angeordnet werden, mit der die Teigstreifen vor der Übergabe an die Twistvorrichtung im rechten Winkel zur Transportrichtung ausgerichtet werden.

Um ein Auftwisten der getwisteten Teigstreifen nach Verlassen der Twistvorrichtung zu verhindern kann der Twistvorrichtung eine andere Vorrichtung unmittelbar nachgeordnet werden.

Bevorzugt wird die Andrückvorrichtung in der Art eines von oben angreifenden Andrückbandes ausgebildet.

Um die gegebenenfalls notwendige Trennung der getwisteten Teigstreifen in mehrere getwistete Teigstreifenabschnitte zu realisieren, kann der Twistvorrichtung eine Trenneinrichtung nachgeordnet sein. In der Trennvorrichtung sind ein oder mehrere Trennorgane vorgesehen, beispielsweise Schneidblätter oder Schneidscheiben, um die Teigstreifen parallel zur Förderrichtung zu durchtrennen.

Die Position der Trennorgane in der Trennvorrichtung sollte bevorzugt quer zur Förderrichtung verstellbar sein, um die Länge der einzelnen Teigstreifenabschnitte auf das jeweilige Produkt abstimmen zu können.

Mehrere Ausführungsbeispiele der Erfindung sind in den Zeichnungen schematisch dargestellt und werden nachstehend beispielhaft erläutert.

Es zeigen:

Fig. 1 eine Seitenansicht einer erfindungsgemäßen Vorrichtung in schematisierter Ansicht;

Fig. 2 einen Ausschnitt der Vorrichtung gemäß Fig. 1 in schematisierter Ansicht von oben;

Fig. 3   eine erste schematisierte Bewegungskinematik eines im Querschnitt dargestellten Teigstreifens während des Twistens;

Fig. 4   eine zweite schematisch dargestellte Bewegungskinematik eines Teigstreifens während des Twistens;

Fig. 5   eine zweite erfindungsgemäße Vorrichtung zum Twisten von mehreren Teigstreifenabschnitten mit alternierend wechselndem Drehsinn in schematisierter Ansicht von oben.

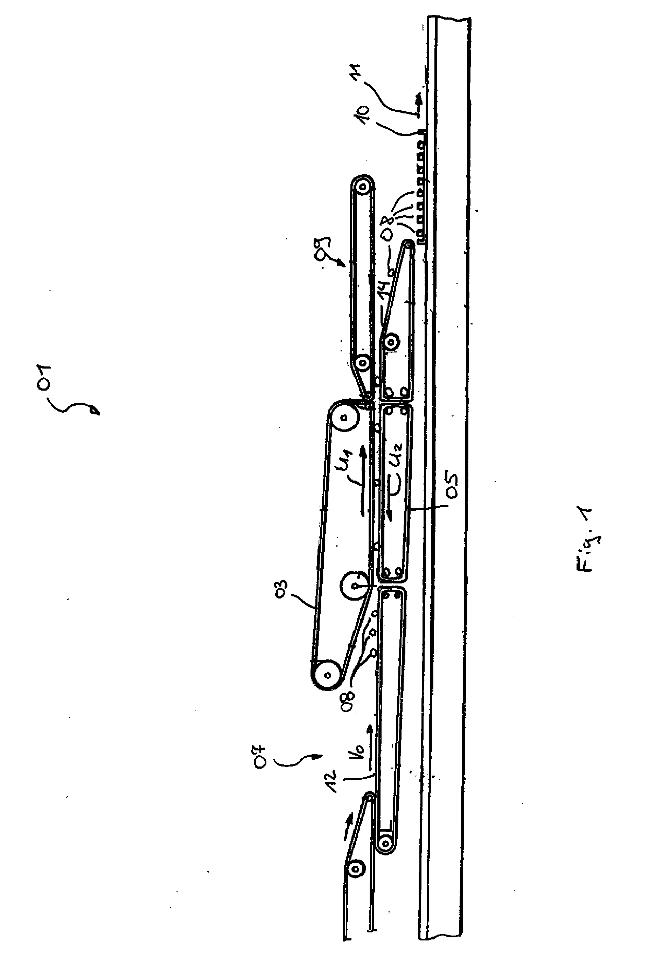

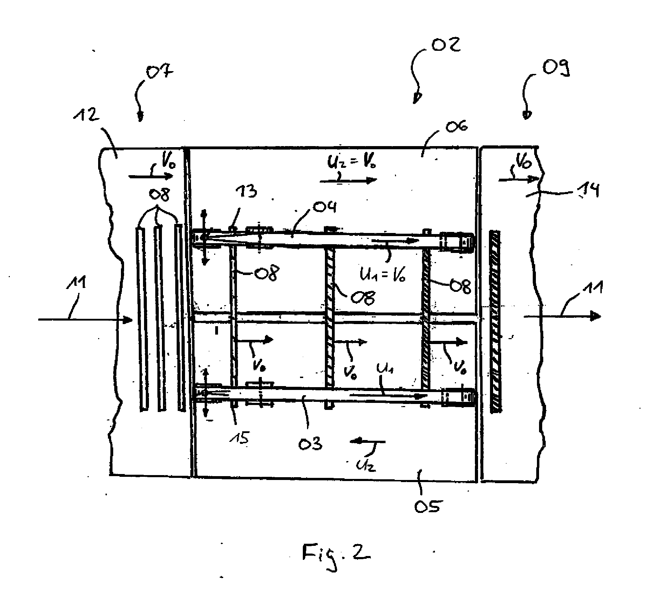

In Fig. 1 ist eine Anlage zum Twisten von aus einem Teigband geschnittenen, langen und zugleich schmalen Teigstreifen 01 in seitlicher Ansicht schematisch dargestellt. Kernstück der Twistanlage 01 ist eine Twistvorrichtung 02, die im Wesentlichen aus zwei Twistbändern 03 und 04 und zwei den Twistbändern 03 und 04 zugeordneten Basisbändern 05 und 06 besteht. Das Twistband 04 und das Basisband 06 sind in Fig. 1 verdeckt dargestellt aber aus Fig. 2 ersichtlich.

Der Twistvorrichtung 02 ist in der Twistanlage 01 eine Zuführvorrichtung 07 vorgelagert. Im nicht dargestellten Teil der Zuführvorrichtung 07 ist eine Schneidvorrichtung vorhanden, mit der aus einem Teigband Teigstreifen 08 (siehe Fig. 2) geschnitten und vereinzelt werden können. Außerdem ist in der Twistanlage 01 der Twistvorrichtung 02 eine Andrückvorrichtung 09 nachgeordnet, mit der die getwisteten Teigstreifen nach Verlassen der Twistvorrichtung in ihrer Gestalt fixiert werden können. Der Andrückvorrichtung 09 ist ein Backblech 10 nachgeordnet, welches von einem nicht dargestellten Motor in Förderrichtung 11 angetrieben und kontinuierlich weitergefördert wird, um die Teigstreifen 08 nach dem Twisten und Andrücken aufzunehmen.

Die Funktion der Twistvorrichtung 02 soll nachfolgend anhand der Darstellung in Fig. 2 erläutert werden. Die Teigstreifen 08 werden nach dem Schneiden und Vereinzeln mit einem zur Zuführvorrichtung 07 zugehörigen Förderband 12 zur Twistvorrichtung 02 hingefördert. Die Teigstreifen 08 liegen dabei rechtwinklig zur Förderrichtung. Am Übergang zwischen dem Förderband 12, der Zuführvorrichtung 07 und den Basisbändern 05 und 06 der Twistvorrichtung 02 werden die Teigstreifen 08 gleichzeitig in den Spalt zwischen den beiden Bandpaaren eingeführt, die jeweils auf dem Twistband 03 und dem Basisband 05 einerseits und dem Twistband 04 und dem Basisband 06 gebildet sind. Das Twistband 04 und das Basisband 06 werden beide synchron zueinander mit einer Umlaufgeschwindigkeit $V_0$ angetrieben, was dazu führt, dass das in Fig. 2 oben dargestellte Ende 13 des Teigstreifens zwischen dem Twistband 04 und dem Basisband 03 nicht rotiert, sondern lediglich translatorisch mit der Fördergeschwindigkeit $V_0$ in Richtung der Andrückvorrichtung 09 mit dem Förderband 14 weitergefördert wird. Zeitgleich befindet sich das zweite Ende 15 des Teigstreifens 08 im Wirkspalt zwischen dem Twistband 03 und dem Basisband 05. Das Twistband 03 wird dabei mit einer Umlaufgeschwindigkeit $U_1$ angetrieben, die signifikant von der Fördergeschwindigkeit $V_0$ abweicht. Die Umlaufgeschwindigkeit $U_2$ des Basisbandes 05 ist dabei gerade so gewählt, dass die resultierende translatorische Fördergeschwindigkeit des Teigstreifens 08 auch am Ende 15 der Fördergeschwindigkeit $V_0$ entspricht, so dass sich im Ergebnis der Teigstreifen 08 über seine gesamte Länge zwischen den beiden Enden 13 und 15 gleichförmig mit der Fördergeschwindigkeit $V_0$ in Förderrichtung bewegt. Zugleich bewirkt der Geschwindigkeitsunterschied zwischen der Umlaufgeschwindigkeit $U_1$ des Twistbandes 03 und der Umlaufgeschwindigkeit $U_2$ des Basisbandes 05 eine Rotation des Endes 15 am Teigstück 08, so dass das Teigstück 08 tordiert und entsprechend getwistet wird.

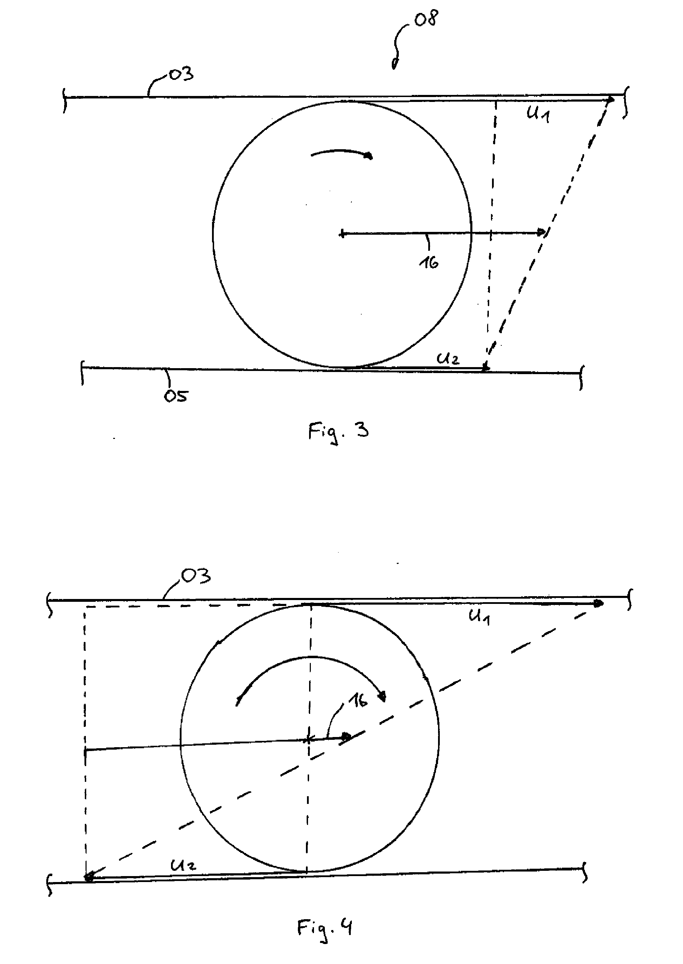

Fig. 3 und Fig. 4 stellen schematisch die Bewegungskinematik beim Vertwisten des Teigstreifens 08 im Bereich des Endes 15 zwischen dem Twistband 03 und dem Basisband 05 dar. In Fig. 3 ist eine Bewegungskinematik dargestellt, bei der das Twistband 03 und das Basisband 05 mit unterschiedlichen Umlaufgeschwindigkeiten $U_1$ und $U_2$ aber mit gleicher Umlaufrichtung umlaufen. Der Bewegungspfeil 16 deutet die translatorische Bewegung des Teigstreifens 08 in Förderrichtung an. Man erkennt, dass die translatorische Geschwindigkeit des Teigstreifens 08 am Ende 15 aus zwei Komponenten besteht. Die erste Komponente entspricht der translatorischen Bewegung des Basisbandes 05 mit der Umlaufgeschwindigkeit $U_2$. Die zweite Komponente resultiert aus der Abwärtsbewegung des zylindrisch angenommenen Teigstreifens 08 und berechnet sich aus der Differenz der beiden Umlaufgeschwindigkeiten $U_1$ minus $U_2$, wobei diese Differenzgeschwindigkeit noch mit dem Faktor ½ zu multiplizieren ist. Im Ergebnis ergibt sich für die translatorische Geschwindigkeit des Teigstücks 08 am Ende 15 eine Bewegungsgeschwindigkeit $V_0$ gemäß der Formel $V_0=U_2+(U_1-U_2):2$.

Fig. 4 stellt die Bewegungskinematik dar, wenn das Twistband 03 und das Basisband 05 in entgegengesetzte Richtungen angetrieben werden. Wiederum ergibt sich die resultierende translatorische Fördergeschwindigkeit des Teigstreifens 08 am Ende 15 aus der Formel $V_0=U_2+(U_1-U_2):2$. Da in diesem Fall $U_1$ und $U_2$ entgegengesetzte Richtungen aufweisen, überlagern sich die translatorische Bewegungsgeschwindigkeit $U_2$ und die durch die Abwärtsbewegung hervorgerufene translatorische Bewegung entgegengesetzt, so dass die resultierende Bewegungsgeschwindigkeit $V_0$ relativ klein ist, wohingegen die Rotationsbewegung des Teigstreifens 08 relativ groß ist. Aus der Bewegungskinematik gemäß Fig. 3 und Fig. 4 ist unmittelbar erkennbar, dass durch entsprechende Abstimmung der Umlaufgeschwindigkeit $U_2$ relativ zur Umlaufgeschwindigkeit $U_1$ die resultierende translatorische Geschwindigkeit $V_0$ des Teigstreifens 08 beliebig verändert werden kann. Durch entsprechende Abstimmung der Umlaufgeschwindigkeit $U_2$ des Basisbandes 05 relativ zur Umlaufgeschwindigkeit $U_1$ des Twi-

stbandes 03 kann also bewirkt werden, dass das Ende 15 sich mit der gleichen translatorischen Fördergeschwindigkeit $V_0$ fortbewegt, wie das Ende, so dass trotz der gewünschten Twistbewegung am Ende 15 eine gleichförmige translatorische Bewegung des Teigstreifens 08 über seine gesamte Länge realisierbar ist.

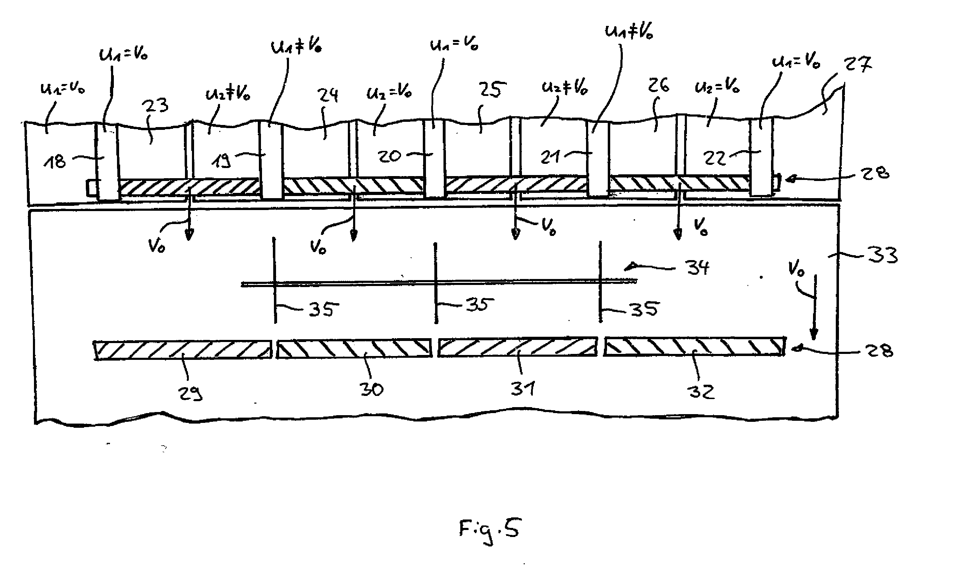

Fig. 5 zeigt einen Ausschnitt aus einer zweiten Twistvorrichtung 17 mit fünf Twistbändern 18, 19, 20, 21 und 22 und den Twistbändern 18 bis 22 jeweils zugeordneten Basisbändern 23, 24, 25, 26 und 27. Zwischen den fünf aus den Twistbändern 18 bis 22 und den zugeordneten Basisbändern 23 bis 27 gebildeten Bandpaaren werden Teigstreifen 28 in vier nebeneinander liegenden Teigstreifenabschnitten 29, 30, 31 und 32 mit alternierendem Drehsinn getwistet. Dies geschieht dadurch, dass die Twistbänder 18, 20 und 22 und die jeweils zugeordneten Basisbänder 23, 25 und 27 jeweils synchron zueinander mit der Fördergeschwindigkeit $V_0$ angetrieben werden, so dass der Teigstreifen 28 zwischen diesen drei Bandpaaren nicht rotiert sondern nur translatorisch mit der Fördergeschwindigkeit $V_0$ in Förderrichtung weitergefördert wird. Die Twistbänder 19 und 21 und die jeweils zugeordneten Basisbänder 24 und 26 werden dagegen mit einer von der Fördergeschwindigkeit $V_0$ abweichenden Umlaufgeschwindigkeit $U_1$ bzw. $U_2$ angetrieben, so dass der Teigstreifen 28 zwischen diesen beiden Bandpaaren rotiert und die gewünschte Twistung erzeugt wird.

Nach Verlassen der Twistvorrichtung 17 wird der Teigstreifen 28 auf ein Förderband 33 übergeben und mittels einer Trenneinrichtung 34 durch Eingriff von drei Schneidorganen 35 in die vier Teigstreifenabschnitte 29, 30, 31 und 32 aufgeteilt.

Auch bei der Twistvorrichtung 17 ist es vorgesehen, dass die Umlaufgeschwindigkeit $U_2$ der Basisbänder 24 und 26 so auf die Umlaufgeschwindigkeit $U_1$ der Twistbänder 19 und 21 abgestimmt ist, dass trotz der rotierenden Abwärtsbewegung des Teigstreifens 28 eine gleichförmige Fördergeschwindigkeit $V_0$ im Wirkbereich zwischen den Twistbändern 19 und 21 einerseits und den Basisbändern 24 und 26 andererseits erreicht wird.

**Patentansprüche**

1.  Verfahren zum Twisten von Teigstreifen (08, 28) mit zumindest zwei unteren Basisbändern (05, 06, 23, 24, 25, 26, 27), die die Teigstreifen (08, 28) entlang einer vorgegebenen Twiststrecke mit einer Fördergeschwindigkeit $V_0$ fördern, und mit zumindest zwei den Basisbändern (05, 06, 23, 24, 25, 26, 27) zugeordneten von oben angreifenden Twistbändern (03, 04, 18, 19, 20, 21, 22), wobei die Teigstreifen (08, 28) am Beginn der Twiststrecke im Wesentlichen gleichzeitig mit den Basisbändern (05, 06, 23, 24, 25, 26, 27) und den jeweils zugeordneten Twistbändern (03, 04, 18, 19, 20, 21, 22) in Eingriff kommen, und wobei zumindest eines der Twistbänder (03, 19, 21) mit einer von der Fördergeschwindigkeit $V_0$ um den Differenzbetrag abweichenden Umlaufgeschwindigkeit $U_1$ angetrieben wird, um die Teigstreifen (08, 28) entlang der Twiststrecke zu twisten, und wobei das diesem Twistband (03, 19, 21) zugeordnete Basisband (05, 24, 26) mit einer von der Fördergeschwindigkeit $V_0$ um einen Differenzbetrag abweichenden Umlaufgeschwindigkeit $U_2$ angetrieben wird, um die Fördergeschwindigkeit der Teigstreifen (08, 28) entlang der Twiststrecke unter Ausgleich des vom Basisband aufgebrachten Differenzbetrags konstant bei $V_0$ zu halten, und wobei die Teigstreifen (08, 28) am Ende der Twiststrecke im Wesentlichen gleichzeitig mit den Basisbändern (05, 06, 23, 24, 25, 26, 27) und den Twistbändern (03, 04, 18, 19, 20, 21, 22) außer Eingriff kommen.

2.  Verfahren nach Anspruch 1,
    **dadurch gekennzeichnet,**
    **dass** die Umlaufgeschwindigkeit $U_2$ des Basisbandes (05, 24, 26) mit der Fördergeschwindigkeit $V_0$ der Teigstücke entlang der Twiststrecke und der Umlaufgeschwindigkeit $U_1$ des zugeordneten Twistbandes (03, 19, 21) nach folgender Formel korreliert:

$$U_2 = 2V_0 - U_1$$

3.  Verfahren nach Anspruch 1 oder 2,
    **dadurch gekennzeichnet,**
    **dass** die Teigstreifen (08, 28) im rechten Winkel zur Transportrichtung (11) auf die Basisbänder (05, 06, 23, 24, 25, 26, 27) aufgegeben werden, insbesondere dass die Teigstreifen (08, 28) vor der Übergabe an die Basisbänder (05, 06, 23, 24, 25, 26, 27) mit einer Ausrichteinrichtung im rechten Winkel zur Transportrichtung (11) ausgerichtet werden.

4.  Verfahren nach einem der Ansprüche 1 bis 3,
    **dadurch gekennzeichnet,**
    **dass** die Teigstreifen (08, 28) im rechten Winkel zur Transportrichtung (11) von den Basisbänder (05, 06, 23, 24, 25, 26, 27) abgegeben werden.

5.  Verfahren nach einem der Ansprüche 1 bis 4,
    **dadurch gekennzeichnet,**
    **dass** mehr als zwei Bandpaare aus jeweils einem Basisband (05, 06, 23, 24, 25, 26, 27) und einem dem Basisband (05, 06, 23, 24, 25, 26, 27) jeweils zugeordnetem Twistband (03, 04, 18, 19, 20, 21, 22) vorhanden sind, wobei die Bandpaare zueinander beabstandet nebeneinander an den Teigstücken (08, 28) zum Eingriff kommen, und wobei jeweils benachbarte Twistbänder (03, 04, 18, 19, 20, 21, 22) mit unterschiedlichen Umlaufgeschwindigkeiten $U_1$ angetrieben werden.

6. Verfahren nach einem der Ansprüche 1 bis 5,
**dadurch gekennzeichnet,**
**dass** zumindest ein Twistband (04, 18, 22) und das jeweils zugeordnete Basisband (06, 23, 27), die an einem Ende (13) des Teigstreifens (08, 28) zum Eingriffkommen, synchron zueinander mit einer der Fördergeschwindigkeit $V_0$ entsprechenden Umlaufgeschwindigkeit angetrieben werden, um eine Rotation dieses Endes (13) des Teigstreifens (08, 28) auszuschließen.

7. Verfahren nach Anspruch 5 oder 6,
**dadurch gekennzeichnet,**
**dass** die Umlaufgeschwindigkeit jeweils benachbarter Twistbänder über die Länge des Teigstreifens stufenweise erhöht ist, um den Teigstreifen über seine Länge mit im wesentlichen konstanter Steigung zu twisten.

8. Verfahren nach Anspruch 5 oder 6,
**dadurch gekennzeichnet,**
**dass** die Umlaufgeschwindigkeit jeweils benachbarter Twistbänder (18, 19, 20, 21, 22) über die Länge des Teigstreifens (28) alternierend erhöht und abgesenkt ist, um den Teigstreifen (28) über seine Länge mit alternierendem Drehsinn zu twisten.

9. Verfahren nach einem der Ansprüche 1 bis 8,
**dadurch gekennzeichnet,**
**dass** die getwisteten Teigstreifen (28) mit zumindest einer Trenneinrichtung (34) in zumindest zwei getwistete Teigstreifenabschnitte (29, 30, 31, 32) aufgeteilt werden, insbesondere dass die Trenneinrichtung (34) die getwisteten Teigstreifen (28) in dem Bereich aufteilt, in dem der alternierende Drehsinn des getwisteten Teigstreifens (28) wechselt, um getwistete Teigstreifenabschnitte (29, 30, 31, 32) ohne alternierenden Drehsinn herzustellen.

10. Verfahren nach einem der Ansprüche 1 bis 9,
**dadurch gekennzeichnet,**
**dass** die Teigstreifen (08) unmittelbar nach Verlassen der Twistbänder (03, 04, 18, 19, 20, 21, 22) von einer Andrückvorrichtung (09) erfasst werden, um die Twistung der Teigstreifen (08) zu fixieren.

11. Vorrichtung (02, 17) zum Twisten von Teigstreifen (08, 28) mit zumindest zwei unteren Basisbändern (05, 06, 23, 24, 25, 26, 27), die die Teigstreifen (08, 28) entlang einer vorgegebene Twiststrecke mit vorgegebener Fördergeschwindigkeit $V_0$ fördern, und mit zumindest zwei den Basisbändern (05, 06, 23, 24, 25, 26, 27) zugeordneten von oben angreifenden Twistbändern (03, 04, 18, 19, 20, 21, 22), wobei zumindest eines der Twistbänder (03, 19, 21) mit einer von der Fördergeschwindigkeit $V_0$ um den Differenzbetrag abweichenden Umlaufgeschwindigkeit $U_1$ angetrieben werden kann, um die Teigstreifen entlang der Twiststrecke zu twisten,
**dadurch gekennzeichnet,**
**dass** die Twistbänder (03, 04, 18, 19, 20, 21, 22) und die Basisbänder (05, 06, 23, 24, 25, 26, 27) derart angeordnet sind, dass die Teigstreifen (08, 28) am Beginn der Twiststrecke im Wesentlichen gleichzeitig mit den Basisbändern (05, 06, 23, 24, 25, 26, 27) und den jeweils zugeordneten Twistbändern (03, 04, 18, 19, 20, 21, 22) in Eingriff kommen und am Ende der Twiststrecke im Wesentlichen gleichzeitig mit den Basisbändern (05, 06, 23, 24, 25, 26, 27) und den Twistbändern (03, 04, 18, 19, 20, 21, 22) außer Eingriff kommen, und wobei Umlaufgeschwindigkeiten $U_2$ von zumindest zwei verschiedenen Basisbändern (05, 06, 23, 24, 25, 26, 27) unabhängig voneinander in Abhängigkeit von der Umlaufgeschwindigkeit $U_1$ des jeweils zugeordneten Twistbandes (03, 04, 18, 19, 20, 21, 22) einstellbar sind.

12. Vorrichtung nach Anspruch 11,
**dadurch gekennzeichnet,**
**dass** mehr als zwei Bandpaare aus jeweils einem Basisband (05, 06, 23, 24, 25, 26, 27) und einem dem Basisband (05, 06, 23, 24, 25, 26, 27) jeweils zugeordnetem Twistband (03, 04, 18, 19, 20, 21, 22) vorhanden sind, wobei die Bandpaare insbesondere mit äquidistanten Abstand nebeneinander angeordnet sind und wobei insbesondere der Abstand zwischen den Bandpaaren einstellbar ist.

13. Vorrichtung nach Anspruch 11 oder 12,
**dadurch gekennzeichnet,**
**dass** eine erste Gruppe von jeweils nicht unmittelbar benachbarten Basisbändern (24, 26) mittels einer ersten Antriebseinrichtung antreibbar ist und eine zweite Gruppe von jeweils nicht unmittelbar benachbarten Basisbändern (23, 25, 27) mittels einer zweiten Antriebseinrichtung antreibbar ist, wobei die Antriebsgeschwindigkeit der ersten Antriebseinrichtung unabhängig von der Antriebsgeschwindigkeit der zweiten Antriebseinrichtung wählbar ist.

14. Anlage (01) zum Twisten von Teigstreifen (08), unter Verwendung einer Vorrichtung (02) nach einem der Ansprüche 11 bis 13,
**dadurch gekennzeichnet,**
**dass** der Vorrichtung (02) zum Twisten der Teigstreifen (08) eine Schneidvorrichtung zur Herstellung und Vereinzelung der Teigstreifen (08) aus einem Teigband vorgeordnet ist.

15. Anlage nach Anspruch 14,
**dadurch gekennzeichnet,**
**dass** die Schneidvorrichtung und die Vorrichtung (02) zum Twisten der Teigstreifen (08) kolinear hintereinander angeordnet sind und/oder dass zwischen der Schneidvorrichtung und der Vorrichtung (02) zum Twisten der Teigstreifen (08) eine Ausrichteinrichtung angeordnet ist mit der die Teigstreifen (08) im rechten Winkel zur Transportrichtung (11) ausgerichtet werden können und/oder dass der Vorrichtung (02) zum Twisten der Teigstreifen (08) eine Andrückvorrichtung (09) unmittelbar nachgeordnet ist, um die Twistung der Teigstreifen (08) zu fixieren und/oder dass der Vorrichtung (17) zum Twisten der Teigstreifen (28) eine Trenneinrichtung (34) nachgeordnet ist, um die getwisteten Teigstreifen (28) mit einem Trennorgan (35) in zumindest zwei getwistete Teigstreifenabschnitte (29, 30, 31, 32) aufzuteilen.

Fig. 1

EP 2 666 361 A2

Fig. 2

EP 2 666 361 A2

08

03

U₁

16

U₂

05

Fig. 3

03

U₁

16

U₂

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3903122 C1